# EUROPÄISCHE PATENTANMELDUNG

(11) **EP 1 091 207 A1**
(43) Veröffentlichungstag der Anmeldung: **11.04.2001**
(21) Anmeldenummer: 99119703.9
(22) Anmeldetag: 05.10.1999
(51) Int. Cl.: G01N 21/73, G01N 21/39

(54) **Verfahren und Vorrichtung zur Stoffanalyse**

(71) Anmelder: LASERSPEC ANALYTIK GmbH, 80808 München (DE)
(72) Erfinder: Schnürer-Patschan,Christoph,Dr., 85435 Erding (DE); Pahlke, Siegfried, 84375 Kirchdorf am Inn (DE)
(74) Vertreter: Hertz, Oliver, Dr.

(57) **Zusammenfassung**

Zur Erfassung des Gehalts mindestens eines Fremdelements in einer Festkörperprobe erfolgt ein Schmelzen der Festkörperprobe in einer Inertgasatmosphäre und eine Freisetzung und/oder Bildung mindestens einer gasförmigen Verbindung des Fremdelements, eine Plasmaanregung der gasförmigen Verbindung zu deren Dissoziation und zur Anregung metastabiler Zustände in Fremdelementatomen, und eine spektrometrische Detektion des Fremdelements durch eine Absorptionsmessung. Eine Detektoreinrichtung zur Durchführung dieses Verfahrens umfaßt insbesondere eine Schmelzeinrichtung (10), eine Plasmakammer (20) und eine Absorptionsmeßeinrichtung (30) (Figur 1).

## Beschreibung

Die Erfindung betrifft ein Verfahren zur Stoffanalyse, insbesondere ein Verfahren zur Detektion von Fremdelementen in einem Festkörper, wie z.B. ein Verfahren zur Erfassung des Sauerstoffgehalts in einer Siliziumprobe, und eine Detektoreinrichtung zur Durchführung eines derartigen Verfahrens. Die Erfindung betrifft auch eine neuartige Verwendung der Laseratomabsorptionsspektroskopie (LAAS).

Die qualitative und/oder quantitative Erfassung von Fremdelementen in Festkörperproben ist insbesondere in der Halbleitertechnik und der Werkstofftechnik eine wichtige technologische Aufgabe, an deren Umsetzung hohe Anforderungen in bezug auf die Nachweisgrenzen und die Zuverlässigkeit gestellt werden. Beispielsweise besteht eine Meßaufgabe darin, den Sauerstoffgehalt in Reinstsilizium in einem Konzentrationsbereich von z.B. 0,1 - 10 µg/g zu ermitteln, wobei die Meßgenauigkeit bei einem Sauerstoffgehalt von 1 µg/g etwa 2% betragen soll.

Die herkömmlichen Meßverfahren zur Bestimmung des Sauerstoffgehalts in Silizium basieren z.B. auf FTIR-Messungen oder auf der Verwendung eines GFA-Systems (GFA - Gas Fusion Analyzer). Der Nachteil der FTIR-Messungen, die insbesondere an Halbleiter-Wafern ausgeführt werden, besteht in der Beschränkung auf bestimmte, niedrig dotierte Materialien. Mit den GFA-Systemen hingegen wird eine Trägergasheißextraktion durchgeführt, indem eine Siliziumprobe (z.B. 500 mg) in einem Graphittiegel unter He-Atmosphäre aufgeschmolzen und der dabei freiwerdende Sauerstoff in Kohlenmonoxid umgewandelt wird. Das Kohlenmonoxid (CO) wird anschließend katalytisch in Kohlendioxid (CO₂) umgesetzt, welches mit einem He-Trägergasfluß in eine Infrarotabsorptionszelle transportiert wird. In dieser erfolgt eine Erfassung der CO₂-Absorption, aus der unter Berücksichtigung einer entsprechenden Kalibration auf den Sauerstoffgehalt rückgeschlossen werden kann.

Das Meßverfahren mit dem GFA-System besitzt die folgenden Nachteile. Der Katalysator zur Umsetzung von CO in CO₂ ist störanfällig. Des weiteren kann mit dem Verfahren die geforderte Meßgenauigkeit, z.B. entsprechend den oben gegebenen Beispielwerten, sowohl in bezug auf die Nachweisgrenze als auch in bezug auf die Reproduzierbarkeit nicht erreicht werden.

Die genannten Probleme treten auch bei der Analyse anderer Festkörperproben und insbesondere beim Nachweis von Nichtmetall-Elementen in metallischen oder halbleitenden Festkörpern auf. Es besteht Interesse an einer verbesserten Detektionstechnik, mit der insbesondere die Probleme in Zusammenhang mit der Verwendung eines Katalysators vermieden und die Absorptionsmessung im fernen Infrarotbereich vereinfacht werden.

Die Aufgabe der Erfindung ist es, ein verbessertes Verfahren zur Erfassung von Fremdelementen in einem Festkörper bereitzustellen, mit dem die oben genannten Probleme überwunden werden und bei dem insbesondere die durch Trägergasheißextraktion aus dem Festkörper getrennten Fremdelemente oder Fremdelementverbindungen ohne eine katalytische Umsetzung einer Absorptionsmessung im sichtbaren Spektralbereich oder im Nahinfrarotbereich unterzogen werden. Die Aufgabe der Erfindung ist es auch, eine Detektoreinrichtung zur Durchführung eines derartigen Verfahrens anzugeben.

Diese Aufgabe der Erfindung wird durch ein Verfahren und eine Detektoreinrichtung mit den Merkmalen gemäß den Patentansprüchen 1 bzw. 8 gelöst. Vorteilhafte Ausführungsformen und Verwendungen der Erfindung ergeben sich aus den abhängigen Ansprüchen.

Die Grundidee der Erfindung besteht darin, mindestens ein Fremdstoffelement oder mindestens eine Fremdstoffelementverbindung durch Trägergasheißextraktion aus einer Festkörperprobe freizusetzen und in ein Mikrowellenplasma zu überführen. Während die Resonanzlinien interessierender Fremdelemente im Spektralbereich unterhalb 200 nm liegen und damit mit der klassischen Atomabsorptionsspektroskopie nicht vermessen werden können, ist es im Plasma möglich, metastabile Zustände der Fremdelemente mit starken Übergängen im roten und/oder nahen infraroten Spektralbereich zu besetzen. Diese Übergänge können mittels Laseratomabsorptionsspektroskopie (LAAS) mit hoher Empfindlichkeit nachgewiesen werden.

Das Überführen des mindestens einen Fremdelements oder der mindestens einen Fremdelementverbindung, jeweils ggf. im Zustand einer gasförmigen Verbindung mit weiteren Elementen, in das Mikrowellenplasma besitzt eine Doppelfunktion. Neben der genannten Anregung von Zuständen mit Übergängen in einem der LAAS zugänglichen Spektralbereichs erfolgt im Plasma auch eine in der Regel vollständige Dissoziation chemischer Verbindungen. Dadurch wird das interessierende Fremdelement im Plasma vollständig atomar freigesetzt, so daß es einer elementspezifischen Detektion mit einem Laserdiodenspektrometer zugänglich ist. Die Tatsache, daß das Mikrowellenplasma die genannte Doppelfunktion besitzt, stellt einen wesentlichen und unerwarteteten Vorteil der Erfindung dar, da erstmalig eine Detektoreinrichtung auf der Basis eines GFA-Systems mit einer bisher unerreichten Empfindlichkeit geschaffen wird. Es werden sämtliche Fremdelementverbindungen, die bei der Trägergasheißextraktion auftreten oder entstehen, im Mikrowellenplasma dissoziiert, so daß tatsächlich alle Fremdelementanteile erfaßt werden können.

Gemäß einer ersten Ausführungsform eines erfindungsgemäßen Systems zur Stoffanalyse ist vorgesehen, die Trägergasheißextraktion und die Plasmaanregung in getrennten, durch geeignete Rohrleitungen verbundenen Reaktionskammern durchzuführen. Die erste Reaktionskammer ist dann als Schmelzeinrichtung aufgebaut, wie sie an sich aus den herkömmlichen GFA-Systemen bekannt ist, während die zweite Reaktionskammer eine Plasmakammer zur Anregung und spektroskopischen Untersuchung der nachzuweisenden Stoffe ist. Gemäß einer alternativen Ausführungsform der Erfindung erfolgen sowohl die Trägergasheißextraktion als auch die Plasmanregung mit der spektroskopischen Untersuchung in einer gemeinsamen Reaktionskammer in Form einer Schmelzeinrichtung, die mit einem Plasmaerzeuger ausgestattet ist. Dieser vereinfachte Aufbau besitzt besondere Vorteile, da beispielsweise in einem Graphitrohrofen mit brennender Plasmaentladung die Feststoffzersetzung simultan zur Plasmaentladung erfolgen kann, ohne daß die spektroskopische Messung dadurch gestört wird.

Gegenstand der Erfindung ist auch eine Detektoreinrichtung zur Erfassung des Fremdelementgehalts in einer Festkörperprobe, die insbesondere die Kombination eines GFA-Systems mit einem LAAS-System unter Verwendung eines Mikrowellenplasmas umfaßt.

Die Erfindung besitzt die folgenden Vorteile. Es wird ein katalysatorfreies Detektionsverfahren beschrieben, bei dem direkte Infrarotmessungen an Fremdelementverbindungen (z. B. CO oder CO₂) vermieden werden. Es wird eine extreme Nachweisempfindlichkeit erzielt, die beispielsweise bei der Erfassung des Sauerstoffgehalts in Reinstsilizium deutlich unterhalb 100 ppb liegt. Die erfindungsgemäße Detektoreinrichtung ist mit bestehenden GFA-Systemen kompatibel und an an sich bekannte LAAS-Systeme leicht anpaßbar.

Weitere Vorteile und Einzelheiten der Erfindung werden aus der Beschreibung der beigefügten Zeichnungen ersichtlich. Es zeigen:
- Fig. 1: eine schematische Übersichtsdarstellung von Ausführungsformen einer erfindungsgemäßen Detektoreinrichtung,
- Fig. 2: eine Kurvendarstellung zur Illustration des Sauerstoffnachweises mit einer erfindungsgemäßen Detektoreinrichtung, und
- Fig. 3: eine weitere Kurvendarstellung zur Illustration des Sauerstoffnachweises mit einer erfindungsgemäßen Detektoreinrichtung.

Die Erfindung wird im folgenden unter Bezug auf die Bestimmung des Sauerstoffgehalts in Reinstsilizium beschrieben, ist jedoch auf diesen Anwendungsfall nicht beschränkt. Allgemein können mit der erfindungsgemäßen Technik einzelne oder mehrere nichtmetallische oder metallische Fremdelemente in metallischen, halbleitenden oder nicht-leitenden Proben nachgewiesen werden. Von Bedeutung ist lediglich, daß das jeweilige Fremdelement thermisch aus der zu untersuchenden Probe ausgetrieben und im gas- oder dampfförmigen Zustand der Plasmaanregung unterzogen werden können. Neben Sauerstoff können beispielsweise auch Halogene, Stickstoff, Chrom oder Schwefel in Silizium, Kuststoff oder Stahl nachgewiesen werden. Desweiteren wird im folgenden ohne Beschränkung vorrangig auf die oben genannte erste Ausführungsform mit getrennten Reaktionskammern Bezug genommen. Die genannte Einzelheiten der Systemtechnik und der Verfahrensweise sind jedoch in analoger Weise auch bei der zweiten Ausführungsform mit einer einzigen Reaktionskammer implementierbar.

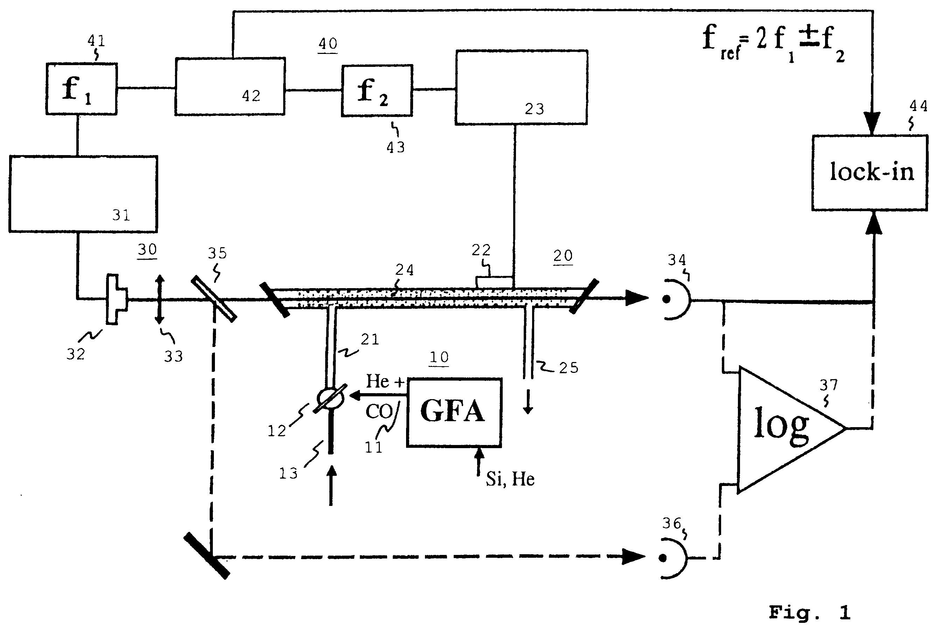

Die erfindungsgemäße Detektoreinrichtung umfaßt gemäß Fig. 1 eine Schmelzeinrichtung 10, die zur Freisetzung der nachzuweisenden Fremdelemente aus einer Probe ausgebildet ist, eine Plasmakammer 20 zur Dissoziation von Fremdelementverbindungen und zur Anregung metastabiler Zustände in Fremdelementatomen, eine LAAS-Einrichtung 30 zur Absorptionsmessung an den Fremdelementatomen und eine Steuereinrichtung 40. Die Freisetzung der Fremdelemente erfolgt vorzugsweise durch ein Schmelzen der Probe in einer Inertgasatmosphäre. Die Schmelzeinrichtung 10 basiert vorzugsweise auf einem GFA-System, wie es an sich vom herkömmlichen Elementnachweis bekannt ist und wie es beispielsweise unter dem Namen RO-416 von LECO Corp., St. Joseph, USA, kommerziell angeboten wird.

Beim illustrierten Beispiel wird über eine Beschickungseinrichtung eine Siliziumprobe (z.B. 500 mg) in einen elektrisch heizbaren Graphittiegel eingesetzt, in dem eine Inertgasatmosphäre, vorzugsweise eine He-Atmosphäre, gebildet ist. Im Graphittiegel der Schmelzeinrichtung 10 wird die Siliziumprobe aufgeschmolzen. Der als Fremdelement freiwerdende Sauerstoff wird mit dem Kohlenstoff des Tiegelmaterials in die gasförmige Verbindung Kohlenmonoxid (CO) umgewandelt. Beim Schmelzen der Siliziumprobe werden auch ggf. in dieser enthaltene Sauerstoffverbindungen freigesetzt, die wiederum ggf. eine Kohlenstoffverbindung eingehen.

Über eine erste Verbindungsleitung 11, ein Kontrollelement 12 und eine zweite Verbindungsleitung 21 wird das Kohlenmonoxid und/oder weitere Sauerstoffverbindungen oder Sauerstoff-Kohlenstoff-Verbindung mit einem Helium-Trägergasstrom zur Plasmakammer 20 geleitet. Das Kontrollelement 12 ist ein Stellglied, das wahlweise die Schmelzeinrichtung 10 oder über eine dritte Verbindungsleitung 13 ein (nicht dargestelltes) Kalibrierungsreservoir mit der Plasmakammer 20 verbindet. Das Kalibrierungsreservoir enthält einzelne Gase oder Gasgemische entsprechend den nachzuweisenden Fremdelementen, die in vorbestimmten quantitativen Zusammensetzungen zur Kalibrierung in die Plasmakammer 20 geleitet werden können. Die Verbindungsleitungen 11, 21 und 13 sind vorzugsweise Edelstahlleitungen, deren Innenoberfläche hochgereinigt sind und die leckfrei miteinander verbunden sind.

Je nach Stabilität des Betriebs der erfindungsgemäßen Detektoreinrichtung dient die genannte Kalibrierung mit zugesetzten Gasen oder Gasgemischen als eigenständige Systemkalibrierung oder lediglich als Nachkalibrierung für eine Standardkalibrierung. Für eine Standardkalibrierung (z.B. zu Beginn eines Meßtages oder Meßzyklus) werden Proben mit bekanntem Fremdstoffgehalt zersetzt und analysiert. Die Nachkalibrierung dient dann nur einer Driftkorrektur zur Kompensation z.B.einer Drift im spektroskopischen Nachweissystem.

Die Plasmakammer 20 besteht aus einem langgestreckten Behälter, der vorzugsweise einen kreisrunden Querschnitt besitzt. Die Kammer besteht beispielsweise aus Quarzglas oder einer sauerstoffreien Keramik, wobei die axialen Endflächen der Kammer aus einem für die Absorptionsmessungen transparenten Material bestehen. Typische Maße der Plasmakammer 20 sind beispielsweise eine Länge von rund 20 cm, ein Außendurchmesser von rund 6 mm und ein Innendurchmesser von rund 2 bis 4 mm.

Mit dem Mikrowellensender 22 wird in der Plasmakammer 20 mit Helium als Plasmagas ein Mikrowellen induziertes Plasma (MIP) 24 gezündet. Im Mikrowellen induzierten Plasma herrscht eine Gastemperatur von rund 1000°C. Die Elektronentemperatur oder -energie im Mikrowellen-induzierten Plasma ist derart hoch, daß eine effiziente elektronische Anregung der nachzuweisenden Fremdstoffe erreicht wird. Sie ist allgemein abhängig vom jeweils eingesetzten Gas und beträgt beispielsweise rd. 20.000 K. Die Leistung des MIP beträgt rund 30 bis 40 W. Der Mikrowellensender 22 wird mit dem Mikrowellengenerator 23 angesteuert, der mit der Steuereinrichtung 40 verbunden ist. Die Plasmaerzeugung unter Verwendung von Mikrowellen ist kein zwingendes Merkmal der erfindungsgemäßen Detektoreinrichtung. Andere Formen der Plasmaerzeugung, z.B. auf der Basis einer Hochfrequenzanregung, können alternativ implementiert werden.

Im MIP wird Kohlenmonoxid in Kohlenstoff und Sauerstoff aufgespalten. Die Sauerstoffatome werden im Plasma angeregt und dabei einer Absorptionsmessung mit der LAAS-Einrichtung 30 unterzogen.

Die LAAS-Einrichtung 30 umfaßt im einzelnen eine Laserdiodenversorgungseinrichtung 31, eine Laserdiode 32, einen Kollimator 33 und ein lichtempfindliches Element 34 (z.B. Photodiode). Die Laserdiode 32, der Kollimator 33 und die Photodiode 34 sind so in bezug auf die Plasmakammer 20 ausgerichtet, daß diese axial durchstrahlt wird. Das Bezugszeichen 35 weist auf einen Strahteiler, der nur bei Einsatz der unten erläuterten, gestrichelt gezeichneten Referenzstrahltechnik vorgesehen ist.

Zum Sauerstoffnachweis erfolgt die Absorptionsmessung entsprechend dem im Plasma angeregten metastabilen Zustand des Sauerstoffs, vorzugsweise bei 777.2 nm.

Der Einsatz einer Laserdiode ist kein zwingendes Merkmal der erfindungsgemäßen Detektoreinrichtung. Als Lichtquelle kann alternativ auch jede andere, vorzugsweise abstimmbare, Strahlungsquelle für den gewünschten Spektralbereich der Absorp tionsmessung eingesetzt werden. Laserdioden werden jedoch wegen der Fähigkeit zur Integration neuer, empfindlicher Detektionstechniken bevorzugt. Es können extrem geringe Absorptionen bis rund 10⁻⁷ und somit sehr geringe Analytmengen bestimmt werden. Hierzu können verschiedene, im folgenden erläuterte Modulationstechniken eingesetzt werden.

Gemäß einer ersten Modulationstechnik erfolgt eine Wellenlängenmodulation der Laserdiode 32 bei einer Modulationsfrequenz f und eine frequenzsensitive Lock-In-Messung des Signals der Photodiode 34 bei der Frequenz f. Mit dieser Wellenlängenmodulation können Nachweisgrenzen unterhalb von 20 ppb erzielt werden.

Alternativ kann auch eine reine Plasmamodulation vorgesehen sein. Hierzu wird ein Parameter des Mikrowellenplasmas mit einer Modulationsfrequenz f variiert und wiederum das Signal der Photodiode 34 einer frequenzsensitiven Lock-In-Messung unterzogen. Es kann beispielsweise vorgesehen sein, den Mikrowellen sender zur Erzeugung des Plasmas mit der Modulationsfrequenz f ein- und auszuschalten. Die Modulationsfrequenz f liegt beispielsweise im unteren kHz-Bereich.

Gemäß einer weiteren Variante wird die in Fig. 1 illustrierte Doppelmodulationstechnik implementiert. Dabei werden sowohl die Wellenlänge der Laserdiode 32 als auch Parameter des MIP 24 moduliert. Die Doppelmodulationstechnik wird im europäischen Patent EP 0 685 729 beschrieben, das hiermit vollständig durch Bezugnahme in die vorliegende Beschreibung einbezogen wird. Zur Realisierung der Doppelmodulationstechnik umfaßt die Steuereinrichtung 40 insbesondere einen ersten Modulator 41, eine Mischeinrichtung 42, einen zweiten Modulator 43 und einen Lock-In-Verstärker 44, die wie folgt zusammenwirken. Mit dem ersten Modulator 41 wird die Wellenlänge der Laserdiode 32 mit einer ersten Modulationsfrequenz f₁ moduliert. Mit dem zweiten Modulator 43 wird ein Parameter des Mikrowellenplasmas (z.B. die Leistung des Mikrowellensenders 22) moduliert. Hierzu ist der zweite Modulator 43 mit dem Mikrowellengenerator 23 verbunden. Mit der Mischeinrichtung 42 sind sowohl der erste als auch der zweite Modulator 41, 43 verbunden. Mit der Mischeinrichtung 42 wird eine Mischfrequenz aus den Modulatorfrequenzen f₁ und f₂ beispielsweise gemäß (2 f₁ - f₂) gebildet. Diese Mischfrequenz wird als Bezugsfrequenz an den Lock-In-Verstärker 44 gegeben. Das Signal der Photodiode 34 wird mit dem Verstärker 44 bei der Mischfrequenz phasensensitiv verstärkt.

Die Doppelmodulationstechnik besitzt den Vorteil, daß die Nachweisgrenze gegenüber der oben zur Wellenlängenmodulation angegebenen Nachweisgrenze nochmals um ein bis zwei Größenordnungen verbessert werden kann.

Die genannten Modulationstechniken besitzen besondere Vorteile bei der Messung geringster Absorptionswerte. Alternativ können auch einfachere Modulationstechniken, wie beispielsweise eine Intensitätsmodulation an der Lichtquelle, oder auch gar keine Modulation vorgesehen sein.

Erfindungsgemäß kann vorgesehen sein, die Plasmaanregung der nachzuweisenden Fremdstoffe unter Unterdruck durchzuführen. Der Unterdruck wird beispielsweise in der Plasmakammer 20 mit einer (nicht dargestellten) Pumpe über die Verbindungsleitung 25 ausgebildet. Der Unterdruck wird anwendungsabhängig, insbesondere unter Berücksichtigung der jeweils erforderlichen Nachweisgrenze, im Bereich zwischen 10 und 50 mbar eingestellt. Mit steigendem Druck in der Plasmakammer nimmt die Zahl der thermischen Stöße zwischen den Gasatomen und damit eine Deaktivierung der angeregten Niveaus zu. Daher ist zur Erzielung einer niedrigen Nachweisgrenze ein geringerer Druck erforderlich als für höhere Nachweisgrenzen.

Das erfindungsgemäße Detektionsverfahren wird vorzugsweise mit einer Kalibrierungsmessung kombiniert, um die in der Plasmakammer 20 gemessene Absorption quantitativ auswerten zu können und um Fehler durch die Freisetzung von Sauerstoff aus dem Kammergehäuse zu beseitigen.

Der Aufbau gemäß Figur 1 kann wie folgt modifiziert werden (gestrichelt eingezeichnet). Es kann vorgesehen sein, daß im optischen Strahlengang zwischen dem Kollimator 33 und der Plasmakammer 20 ein Strahlteiler 35 zur Trennung des Meßlichts in zwei Teilstrahlen vorgesehen ist. Das über den Strahlteiler 35 abgelenkte Licht wird auf eine ebenfalls zweite Photodiode 36 gerichtet, deren elektrisches Signal simultan zum Signal der ersten Photodiode 34 auf Eingänge eines logarithmischen Verstärkers 37 gegeben wird. Der logarithmische Verstärker 37 ist ein Differenzverstärker mit logarithmischer Kennlinie, dessen Ausgangssignal auf den Eingang des Lock-In-Verstärkers 44 gegeben wird. Der Strahlteiler 35 ist beispielsweise eine beschichtete Strahlteilerplatte mit einer Transmission von 50%. Diese Zweistrahlmeßtechnik besitzt mehrere Vorteile. Es wird eine zusätzliche Korrektur von Meßlichtschwankungen bereitgestellt. Der logarithmische Verstärker liefert eine Linearisierung der Absorptionsmessung. Das logarithmierte Ausgangssignal stellt ein Meßsignal dar, daß gemäß dem LambertBeer'schen-Gesetz ein direktes Maß für die zu messende Konzentration ist.

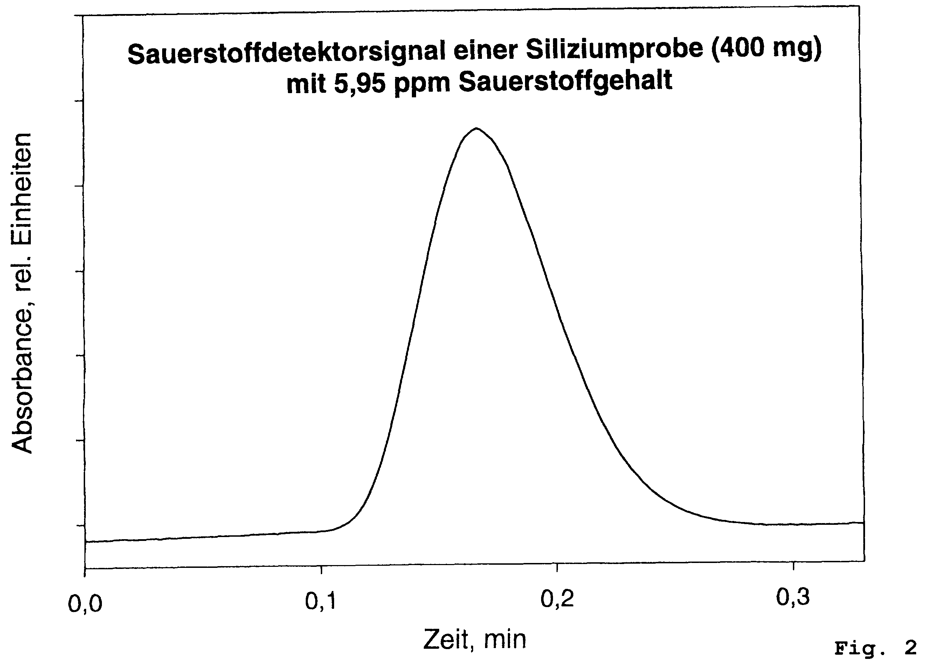

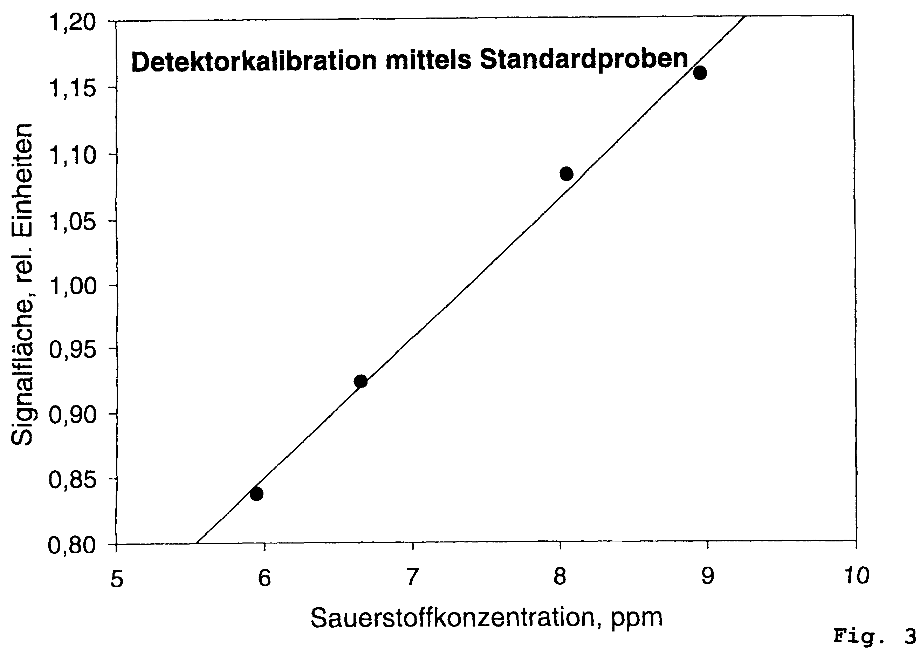

Die Figuren 2 und 3 illustrieren experimentelle Ergebnisse bei der Sauerstoffdetektion mit einer erfindungsgemäßen Detektoreinrichtung. In Fig. 2 ist das mit der Photodiode 34 phasensensitiv ermittelte Signal im Zeitverlauf dargestellt. Die Absorptionswerte für eine 5.95 ppm-Probe zeigen nach Beginn des Einführens von Kohlenmonoxid in die Plasmakammer 20 zunächst einen Anstieg entsprechend der zunehmenden Gaseinleitung der verdampften Probe in die Plasmakammer und der damit zunehmenden Detektion der angeregten Sauerstoffatome. Nach Beendigung der Kohlenmonoxidzufuhr wird ein Maximum der Absorptionswerte durchlaufen, gefolgt von einem Abfall entsprechend dem laufenden Gasabtransport aus der Plasmakammer 20 über die Verbindungsleitung 25 mit der bereits genannten Pumpe. Fig. 2 zeigt auch die Bildung eines Sauerstoffuntergrundsignals entsprechend den nicht-verschwindenden Absorptionswerten vor dem Beginn der Kohlenmonoxidzuführung und nach Ende des Signalabfalls.

In Fig. 3 sind Absorptionssignale in Abhängigkeit von verschiedenen Sauerstoffkonzentrationen in Siliziumproben (Masse rund 0.4 g) jeweils bekannter Sauerstoffkonzentration dargestellt. Es zeigt sich eine nahezu lineare Zunahme des Absorptionssignals mit der Sauerstoffkonzentration in der Siliziumprobe.

Die erfindungsgemäße Detektoreinrichtung kann wie folgt abgewandelt bzw. abgewandelt betrieben werden. Es ist eine Fremdelementdetektion auch ohne Modulationstechnik implementierbar. Die Gestalt der Plasmakammer 20 kann an einen abgewandelten Absorptionsmeßaufbau angepaßt sein. Die Schmelzeinrichtung und die Plasmakammer können in einer gemeinsamen Reaktionskammer z.B. in Form eines Graphitrohrofens mit einem Plasmaerzeuger, ausgebildet sein. Schließlich können auch zur Signalauswertung verschiedene, aus der LAAS-Spektrokospie an sich bekannte Auswertungsverfahren realisiert werden.

## Patentansprüche

1. Verfahren zur Erfassung des Gehalts mindestens eines Fremdelements in einer Festkörperprobe, mit den Schritten:
- Schmelzen der Festkörperprobe in einer Inertgasatmosphäre und Freisetzung und/oder Bildung mindestens einer gasförmigen Verbindung des Fremdelements,
- Plasmaanregung der gasförmigen Verbindung zur Dissoziation der gasförmigen Verbindung des Fremdelements und zur Anregung metastabiler Zustände in Fremdelementatomen, und
- spektrometrische Detektion des mindestens einen Fremdelements durch eine Absorptionsmessung.

2. Verfahren gemäß Anspruch 1, bei dem das Schmelzen der Festkörperprobe in einer Schmelzeinrichtung (10) und die Plasmaanregung der gasförmigen Verbindung in einer Plasmakammer (20) erfolgen, wobei die gasförmige Verbindung von der Schmelzeinrichtung (10) zur Plasmakammer (20) über Verbindungsleitungen (11, 21) transportiert wird.

3. Verfahren gemäß Anspruch 1, bei dem das Schmelzen der Festkörperprobe und die Plasmaanregung der gasförmigen Verbindung in einer gemeinsamen Reaktionskammer erfolgen.

4. Verfahren gemäß Anspruch 1, bei dem zur Absorptionsmessung ein Laserdiodenatomabsorptionsspektrometer (30) verwendet wird.

5. Verfahren gemäß Anspruch 4, bei dem das Laserdiodenatomabsorptionsspektrometer mit einer Wellenlängenmodulation, einer Plasmamodulation oder einer Doppelmodulation mit Wellenlängen- und Plasmamodulation betrieben wird.

6. Verfahren gemäß Anspruch 1, bei dem das mindestens eine Fremdelement ein nicht-metallisches oder ein metallisches Element und die Festkörperprobe ein nicht leitendes, ein halbleitendes oder metallisches Material umfassen.

7. Verfahren gemäß Anspruch 6, bei dem das mindestens eine Fremdelement ein Halogen, Sauerstoff, Stickstoff, Chrom und/oder Schwefel umfaßt und die Festkörperprobe aus Silizium oder Stahl besteht.

8. Detektoreinrichtung zur Erfassung des Gehalts mindestens eines Fremdelements in einer Festkörperprobe, die aufweist:
- eine Schmelzeinrichtung (10) zum Schmelzen der Festkörperprobe in einer Inertgasatmosphäre,
- eine Plasmakammer (20), die mit einer Einrichtung zur Erzeugung eines Plasmazustandes ausgestattet ist, und
- eine Absorptionsmeßeinrichtung (30).

9. Detektoreinrichtung gemäß Anspruch 8, bei der die Schmelz-Einrichtung (10) und die Plasmakammer (20) getrennte Reaktionskammern sind, die über Verbindungsleitungen (11, 21) miteinander verbunden sind.

10. Detektoreinrichtung gemäß Anspruch 8, bei der die Schmelzeinrichtung (10) und die Plasmakammer (20) eine gemeinsame Reaktionskammer bilden.

11. Detektoreinrichtung gemäß Anspruch 8, bei der die Absorptionsmeßeinrichtung ein Laserdiodenatomabsorptionsspektrometer umfaßt.

12. Detektoreinrichtung gemäß Anspruch 10, bei der die Plasmakammer (20) die Gestalt eines langgestreckten Rohres besitzt und aus Quarzglas oder einer sauerstoffreien Keramik besteht.

13. Detektoreinrichtung gemäß einem der Ansprüche 8 bis 12, bei der die Schmelzeinrichtung (10) einen Graphittiegel eines GFA-Systems enthält.

14. Verwendung eines Laserdiodenatomabsorptionsspektrometers zur Absorptionsmessung an dissozierten Fremdelementatomen in einem plasmaangeregten Zustand.
